# EUROPEAN PATENT APPLICATION

(11) **EP 4 311 004 A1**
(43) Date of publication of application: **24.01.2024**
(21) Application number: 22186260.0
(22) Date of filing: 21.07.2022
(51) Int. Cl.: H01M 50/308, H01M 50/325, H01M 50/358, H01M 50/30

(54) **VENTILATION DEVICE AND BATTERY SYSTEM**

(71) Applicant: Newfrey LLC, New Britain, CT 06053 (US)
(72) Inventor: STAU, Bastian, 35394 Gießen (DE); AKBARINIA, Alireza, 35394 Gießen (DE)
(74) Representative: SBD IPAdmin

(57) **Abstract**

Battery system and ventilation device for a battery system with a battery casing having a vent opening. The ventilation device (12) comprises a housing (20) adapted to be attached to the battery casing, a cap (22) with an outer surface and an inner surface, wherein the inner surface faces the housing, and wherein the cap cooperates with the housing, a permeable membrane (24) adapted to ensure pressure balance and/or emergency venting between the inside of the casing and its environment during normal operation conditions of the battery system. Besides, the ventilation device further comprises a dehumidification unit (26).

## Description

The present invention relates to a ventilation device for a battery, and particularly to a venting device for a casing of a battery submodule, battery module or battery system that is configured for being integrated in that casing. More particularly, the present invention relates to a device for equalizing the internal pressure of a housing, in particular a battery housing of a motor vehicle, with the ambient pressure of the housing. Furthermore, the invention relates to a battery system comprising such ventilation device.

Batteries usually have several battery modules, each of which is equipped with a plurality of electrochemical storage cells. These battery modules are housed in a casing.

In casings of battery systems, in particular high-voltage battery system, such as those used in motor vehicles, temperature and pressure changes result in pressure differences between the housing of the battery system and the environment.

These pressure differences must be balanced in normal operation. To provide thermal control of the enclosed components a thermal management system may be used to efficiently emit, discharge and/or dissipate heat generated within the casing. If such thermal management system is omitted or the heat drain from the casing is not sufficiently performed, an increase of the internal temperature can lead to abnormal reactions occurring therein.

The pressure equalization is often realized with a ventilation device (also called a degassing valve). In a known manner, such ventilation device comprises a housing adapted to be inserted in a battery casing vent opening and a valve which can be for instance a diaphragm.

Besides, battery casings need to be sealed against the ingress of liquids, especially water, from the outside. Indeed, a collection of liquids or fluids inside the battery casing is problematic because these can lead to corrosion and/or short-circuits. Moreover, condensation fluid can start moving while the motor vehicle is in motion and thus comes into contact with electronically sensitive points within the battery.

However, due to penetrations of connectors and/or coolant lines and due to venting openings which relieve any excess pressure created when individual cells burst, a battery casing cannot be designed completely leak-proof.

In order to avoid those drawbacks, several devices exist to provide adsorption and/or absorption of penetrating water and forming condensation water.

For example, active air dryers are provided in the battery. These active air dryers increase the weight and require an electrical assistance which complexify the battery assembly.

WO2012076808A1 or WO2016071492A1 both disclose a sealed high-voltage battery pack for a hybrid or electric vehicle, comprising a casing in which cells for the production, storage and release of electrical energy are arranged, and an extractable reservoir which contains a moisture-absorbing material. The adsorption and/or absorption of water is thus realized.

The integration of a reservoir which contains a moisture-absorbing material in the casing implies a structural change in the casing with a new drilling. Besides, it increases the weight of the battery casing.

DE102014111041A1 discloses a degassing valve comprising a support element and a water-proof and breathable membrane. A tensioning frame is configured to press the membrane against the support element with a pressing force. The tensioning frame is configured such that when a pressure difference between an interior of the housing and a surrounding of the housing exceeds a trigger force, the membrane detaches from the support element and exposes a fluid channel between the interior of the housing and the surrounding of the housing, the exposed fluid channel being configured to degas the interior of the housing.

The water-proof membrane refrains penetration of wastewater, but it does not avoid water condensation. More particularly, the disadvantage of the currently used solution is that no water penetrates through the pores of the membrane, but some humidity does over a longer period of time. Besides, the valve has a complex arrangement.

Therefore, it is an object of the present invention to provide a ventilation device which is cost-effective, easy to assemble, ensure a correct and reliable pressure balance, and by means of which adsorption and absorption of penetrating water and forming condensation water is ensured, over the entire life of the battery.

Accordingly, the present disclosure is directed to a ventilation device for a battery with a battery casing having a vent opening according to claim 1 and to a battery system according to claim 15.

More particularly, the ventilation device for a battery system with a battery casing having a vent opening, comprises a housing adapted to be attached to the battery casing, a cap with an outer surface and an inner surface, and a permeable membrane adapted to ensure pressure balance and/or emergency venting between the inside of the casing and its environment during normal operation conditions of the battery system. The ventilation device further comprises a dehumidification unit.

By integrating a dehumidification unit directly onto the ventilation device, one avoid unnecessary drilling into the casing. The ventilation device is easy to assemble and ensure the dehumidification function. There is no need to provide a further separated part for this function. Thus, the weight of the battery casing is not significantly increased and the assembly time is reduced.

In an embodiment, the dehumidification unit is a cartridge arranged at least partly in a recess of the housing and is removably connected to the housing. Thus if needed, the dehumidification unit can be easily removed, dismounted and/or maintained.

In an embodiment, the dehumidification unit comprises a dehumidification chamber. Dehumidifier granules may be arranged inside the dehumidification chamber. The dehumidifier granules have a relatively light weight, and passively ensure the dehumidification (adsorption and/or absorption) function.

In an embodiment, the dehumidifier granules are a granulate of calcium chloride. Such granulates have reliable performances.

In an embodiment, the dehumidification unit comprises a condensation collector adapted to receive condensation water. In an embodiment, the condensation collector is removably connected to the rest of the dehumidification unit. The condensation water can thus easily be removed when needed.

In an embodiment, the membrane is a first membrane and the ventilation device further comprises a second membrane, and wherein the first and the second membranes are fixed to the housing.

In an embodiment, the dehumidification unit is arranged between the first and the second membrane. Thus, it is neither in direct contact with the interior of the battery casing, nor with the exterior.

In an embodiment, the second membrane is fixed to the housing by gluing or ultrasonic welding. These are reliable and easy to implement methods.

In an embodiment, the first and/or the second membrane is a permeable (or breathable) membrane. Thus the membrane can easily ensure the pressure balance in a normal environment.

In an embodiment, the first and/or the second membrane is (are) made of Polytetrafluoroethylene or Polyethylenterephthalat.

In an embodiment, the ventilation device further comprises a sealing ring extending around the housing. The sealing ring is adapted to sealingly fix the ventilation device to the casing.

The present invention is also directed to a battery system comprising a battery casing with a vent opening and a ventilation device according to any of the preceding claims, wherein the housing is inserted in the vent opening.

A specific embodiment of the present invention will now be described, by way of example only and with reference to the accompanying drawings, of which:
Fig. 1 is a schematic perspective view of a battery system with a ventilation device according to the invention;
Fig. 2 is a side view in section of the ventilation device of Fig. 1;
Fig. 3A is a perspective views of the dehumidification unit of the ventilation device of Fig. 2;
Fig. 3B is a view of the dehumidification unit of Fig. 3A without a portion of the lid.

On the different figures, the same reference signs designate identical or similar elements.

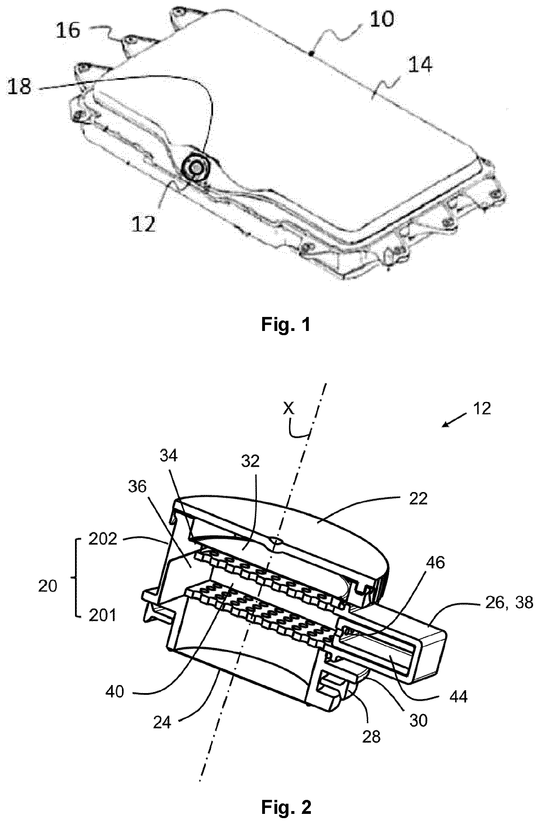

Fig. 1 illustrates a schematic perspective view of a battery system 10 with a ventilation device 12. The shape of the battery system 10 and the arrangement in Fig. 1 is for illustration purpose. The battery system 10 comprises a casing 14. In the context of the present application, a battery system 10 is to be understood as one of a battery submodule, a battery module and a battery pack. Hence the battery casing 14 is to be understood to be a casing of one of a battery submodule, a battery module and a battery pack. The casing 14 may consist of a metal alloy and/or a plastic material. The battery system 10 may comprise a plurality of attachment portions 16 for mounting the battery system to a fixing structure, for example an electric vehicle. The casing 14 comprises a vent opening 18. More particularly, the casing 14 may comprise two or three vent openings. Eventually more than three vent openings may also be provided.

The vent opening 18 is adapted to receive the ventilation device 12. The ventilation device 12 is more particularly depicted in Fig. 2. In an embodiment, the ventilation device 12 is configured to be attached to the casing 14 for covering and/or overlapping the vent opening 18. In another embodiment, the ventilation device 12 is configured to be inserted into the vent opening 18.

As depicted in Fig. 2, the ventilation device 12 comprises a housing 20, a cap 22, a first membrane 24 and a dehumidifier unit 26. The first membrane 24 is glued or welded (ultrasonically welded) to the housing 20, the cap 22 forms a lid for the housing 20 and the dehumidifier unit 26 is removably connected to the housing 20.

The housing 20 is for instance sensibly annular around a longitudinal axis X. However, in other embodiment, the shape of the housing 20 may be rectangular or oval. Actually, the shape of the housing 20 is complimentary with the shape of the vent opening 18. In the embodiment of Fig. 2, the housing 20 is integral and comprises a first cylindrical portion 201 connected to a second cylindrical portion 202. The first cylindrical portion 201 may have a reduced diameter with regard to the second cylindrical portion 202.

The first cylindrical portion 201 is adapted for example to be inserted into the vent opening 18. A sealing ring 28 may surround the first cylindrical portion 201. The sealing ring 28 is for instance made of elastomer or thermoplastic elastomer. The sealing ring 28 is for instance an O-ring. The housing 20 may comprise a flange 30 on its outer surface arranged between the first cylindrical portion 201 and the second cylindrical portion 202. The sealing ring 28 may be arranged below the flange 30. The sealing ring 28 has for example a flat surface sensibly parallel to the flange, and a lateral surface, orthogonal to the flat surface. The sealing ring 28 is such that the ventilation device 12 may be connected to the casing 14 in an airtight and watertight manner. The vent opening 16 has a shape complimentary to the shape of the first cylindrical portion 201 with the sealing ring 28.

The first cylindrical portion 201 is adapted to receive at one of its free end the first membrane 24. The first membrane 24 is instance glued or welded (ultrasonically welded) to the free end of the first cylindrical portion 201 (more particularly the edge of the free end). The first membrane 24 has a circular shape with a diameter corresponding sensibly to the diameter of the first cylindrical portion 201. Thus, the first membrane 24 sensibly closes the free end of the first cylindrical portion 201. The first membrane 24 is a breathable membrane and is for instance made of Polytetrafluoroethylene or Polyethylenterephthalat.

The ventilation device 12 may also be provided with a second membrane 32. The second membrane 32 may be identical or similar to the first membrane. The second membrane 32 is a breathable membrane and is for instance made of Polytetrafluoroethylene or Polyethylenterephthalat. The second membrane 32 for instance extends at a free end of the second cylindrical portion 202 or in the vicinity of said free end. For instance the second membrane 32 is glued or welded (ultrasonically welded) to a rim 34 in the vicinity of the free end second cylindrical portion. The rim 34 is an internal rim. The second membrane 32 has a circular shape with a diameter corresponding sensibly to the diameter of the internal rim 34.

The cap 22 contacts the free end (and more particularly the free edge) of the second cylindrical portion 202. The cap 22 is for instance a protective cap. The cap 22 comprises an outer surface and an inner surface. The inner surface faces the housing 20, wherein the outer surface is opposite the inner surface. The cap 22 has a sensibly circular shape. The cap 22 in the embodiment disclosed does not contact the second membrane 32. A gap exists between the cap and the second membrane. However, in another embodiment, the cap could be used to press fit the second membrane to the housing. The cap 22 is for instance integral. The cap 22 could be provided with a plurality of openings.

The housing 20 is further provided with a recess 36 extending between the first membrane 24 and the second membrane 32. The recess 36 is laterally accessible or open. The recess 36 is adapted to removably receive the dehumidifier unit 26. More particularly, the dehumidifier unit 26 is a cartridge 38 which can be removably inserted and fixed within the recess. The cartridge 38 for example can move linearly with regard to the housing 20. More particularly the cartridge 38 can be laterally inserted into the recess 36. The cartridge 38 comprises a dehumidification chamber 40. The dehumidification chamber 40 receives for example dehumidifier granules adapted to provide adsorption and absorption. The dehumidifier granules can be a granulate of calcium chloride. The walls of the dehumidification chamber may be provided with a plurality of through holes 42 for the passage of the condensed water. For instance the walls of the dehumidification chamber extending orthogonal to the longitudinal axis (when the cartridge is in its mounted state) are both provided with a plurality of through holes 42.

The cartridge 38 may also comprise a condensation collector 44. The condensation collector 44 is for instance arranged next to the dehumidification chamber 40. The condensation collector 44 is adapted to receive condensation water. The condensation collector 44 may for instance be detached from the dehumidification chamber 40, such that a user can remove or change only the condensation collector 44. A collector wall 46 separates the dehumidification chamber 40 and the condensation collector 44. The collector wall is for instance provided with a plurality of holes. The rest of the condensation collector 44 is watertight. The dehumidification chamber 40 is arranged within the recess 36, wherein the condensation collector 44 may extend outside of the recess 36.

The housing 20, the cartridge 38 and the cap 22 are for instance all made of plastic material.

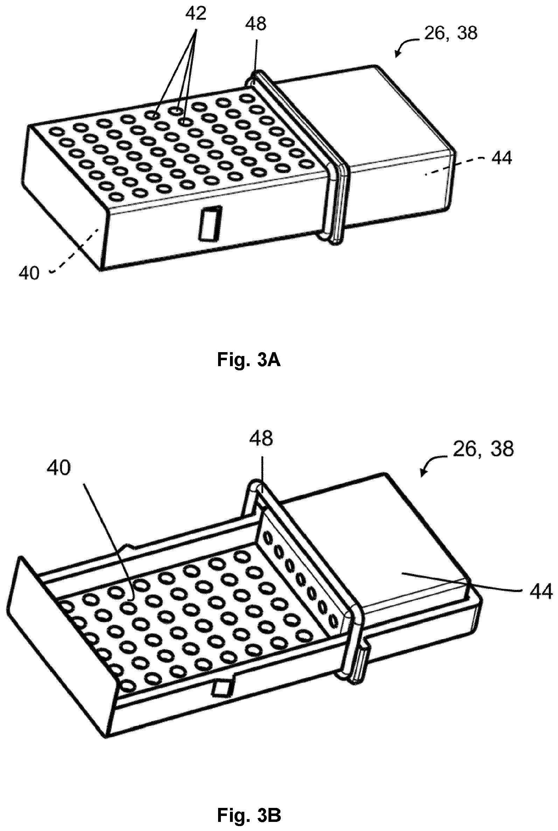

As better seen in Fig. 3A and Fig. 3B, the cartridge 38 may have a parallelepipedal shape. The cartridge may be a two parts element. The walls of the cartridge 38 define the dehumidification chamber 40. The condensation collector 44 may be an additional box arranged in the cartridge . The condensation collector 44 can be removed from the rest of the cartridge 38. In an embodiment, the condensation collector can be removed from the rest of the cartridge without removing the cartridge from the housing.

The ventilation device 12 is thus easy to use. For instance, the ventilation device (with the cartridge 38) is mounted in an airtight manner in the vent opening 18 of the casing 14. The first cylindrical part 201 is press-fitted in the vent opening 18 and thus securely fixed to the casing 14. After a certain period of time, a user can either remove the cartridge 38 in order to change the dehumidifier granules and/or to remove the condensed water from the condensation collector 44. After this step, the user can easily reinstall the cartridge within the recess without any damage to the rest of the ventilation device or to the casing. As mentioned above, only the dehumidification chamber extends in the recess 36. The condensation collector extends outside and a seal 48 is provided surrounding the cartridge at the interface between the condensation collector and the dehumidification chamber in order to sealingly arrange the cartridge in the housing 20. Eventually the outer wall of the cartridge may be provided with a rim at the interface between the condensation collector 44 and the dehumidification chamber 40, such that the seal can be press fitted between the rim and the edges of the recess 36.

## Claims

1. Ventilation device (12) for a battery system with a battery casing having a vent opening, comprising:
- a housing (20) adapted to be attached to the battery casing,
- a cap (22) with an outer surface and an inner surface, wherein the inner surface faces the housing, and wherein the cap cooperates with the housing,
- a permeable membrane (24) adapted to ensure pressure balance and/or emergency venting between the inside of the casing and its environment during normal operation conditions of the battery system,
**characterized in that** the ventilation device further comprises a dehumidification unit (26).

2. Ventilation device (12) according to claim 1, wherein the dehumidification unit (26) is a cartridge (38) arranged at least partly in a recess (36) of the housing (20) and is removably connected to the housing (20).

3. Ventilation device (12) according to claim 1 or 2, wherein the dehumidification unit (26) comprises a dehumidification chamber (40), and wherein dehumidifier granules are arranged inside the dehumidification chamber.

4. Ventilation device (12) according to claim 3, wherein the dehumidifier granules are a granulate of calcium chloride.

5. Ventilation device (12) according to any of the preceding claims, wherein the dehumidification unit (26) comprises a condensation collector (44) adapted to receive condensation water.

6. Ventilation device (12) according to claim 5, wherein the condensation collector (44) is removably connected to the rest of the dehumidification unit (26).

7. Ventilation device (12) according to any of the preceding claims, wherein the membrane is a first membrane (24) and the ventilation device further comprises a second membrane (32), and wherein the first and the second membranes (24, 32) are fixed to the housing.

8. Ventilation device (12) according to the preceding claim, wherein the dehumidification unit (26) is arranged between the first and the second membrane (24, 32).

9. Ventilation device (12) according to claim 7 or 8, wherein the second membrane (32) extends between the housing (20) and the cap (22).

10. Ventilation device (12) according to claim 7, claim 8 or claim 9, wherein the housing (20) comprises a first end adapted to face the interior of a battery system and a second end opposite the first end, wherein the first membrane (24) is fixed to the first end and the second membrane (32) is fixed to the second end or in the vicinity of the second end.

11. Ventilation device (12) according to any of claims 7 to 10, wherein the second membrane (32) is fixed to the housing (20) by gluing or ultrasonic welding.

12. Ventilation device (12) according to any of the preceding claims, wherein the first and/or the second membrane is a permeable membrane.

13. Ventilation device (12) according to any of the preceding claims, wherein the first and/or the second membrane (24, 32) is (are) made of Polytetrafluoroethylene or Polyethylenterephthalat.

14. Ventilation device (12) according to any of the preceding claims, further comprising a sealing ring (28) extending around the housing.

15. Battery system comprising a battery casing (14) with a vent opening (18) and a ventilation device (12) according to any of the preceding claims, wherein the housing (20) is inserted in the vent opening.
